# EUROPEAN PATENT SPECIFICATION

(11) **EP 3 461 055 B1**
(45) Date of publication and mention of the grant of the patent: **12.02.2020**
(21) Application number: 17382624.9
(22) Date of filing: 20.09.2017
(51) Int. Cl.: H04L 9/00, G09C 1/00

(54) **SYSTEM AND METHOD FOR SECURE OUTSOURCED ANNOTATION OF DATASETS**
SYSTEME UND VERFAHREN FÜR SICHERE AUSGELAGERTE ANNOTATION VON DATENSÄTZEN
SYSTÈME ET PROCÉDÉ POUR ASSURER L'ANNOTATION EXTERNALISÉE SÉCURISÉE D'ENSEMBLES DE DONNÉES

(43) Date of publication of application: 27.03.2019
(73) Proprietor: Universidad de Vigo, 36310 Vigo (ES); Fundación Centro Tecnoloxico de Telecomunicacions de Galicia, 36310 Vigo (ES)
(72) Inventor: TRONCOSO PASTORIZA, JUAN RAMON, 36310 VIGO (ES); PEDROUZO ULLOA, ALBERTO, 36310 VIGO (ES); PEREZ GONZALEZ, FERNANDO, 36310 VIGO (ES)
(74) Representative: Carvajal y Urquijo, Isabel

(56) References cited:
- US-A1- 2011 123 023
- PAPPAS VASILIS ET AL: "Blind Seer: A Scalable Private DBMS", 2014 IEEE SYMPOSIUM ON SECURITY AND PRIVACY, IEEE, 18 May 2014 (2014-05-18), pages 359-374, XP032686171, ISSN: 1081-6011, DOI: 10.1109/SP.2014.30 [retrieved on 2014-11-13]
- ALEXANDROS KARYPIDIS ET AL: "Automated context aggregation and file annotation for PAN-based computing", PERSONAL AND UBIQUITOUS COMPUTING, SPRINGER VERLAG, LONDON, GB, vol. 11, no. 1, 23 October 2006 (2006-10-23), pages 33-44, XP058103651, ISSN: 1617-4909, DOI: 10.1007/S00779-005-0061-4

## Description

### BACKGROUND OF THE INVENTION

The present invention relates to secure processing. Particularly, the present invention refers to a method for secure annotation of sensitive datasets in outsourced environments.

Annotating a file consists on looking for tokens inside a dataset and embedding extra information coming from a reference dictionary (annotations) to enrich the dataset. This is usually a tedious and repetitive process for which the amount of managed data can rapidly grow and make it unfeasible for in-house resources of a small institution or corporation; consequently, it is amenable to be outsourced. Nevertheless, when the managed data is sensitive (either confidential, private, or personal and identifiable according to data protection regulations), the process cannot be directly sent to an untrustworthy environment, as the data cannot be leaked to the outsourced parties performing the annotation and/or reannotation. Hence, this invention discloses a method that addresses this outsourced annotation and reannotation processes in an encrypted form, in such a way that data leakage is minimized.

There are many different scenarios where annotation tools find application. For example, they are an essential tool when dealing with genomic scenarios and the management of variant call format files, which contain the information about the mutations (variants) present in genetic samples and are annotated against databases of known mutations, their characteristics, and their effect in health. Another example comprises databases of computer viruses or malware, in which signatures of malicious software are annotated with their properties, applicability and effective countermeasures. Additionally, the case of police databases of suspects or wanted criminals, for which the identifiable features of an individual can be matched to determine his/her record and whether he/she is being searched. Finally, annotation is also applicable in the case of missing people, such that a global database of individual information can be matched against people passing through borders, requesting administrative services or contacting official institutions.

The requirements imposed by the secure annotation and reannotation outsourced scenario are the following:
1. The reference annotations are private: This condition requires that the whole dataset should be encrypted, and cannot be decrypted during the annotation process
2. The reference cannot be re-encrypted for every query: This condition implies that the used keys have to be the same for all the datasets compared to a given annotation reference
3. The server must perform the annotation in an unattended way: This requirement implies that the server must annotate the dataset with no user interaction.
4. The leakage to the server has to be minimized: This implies that the server should be able neither to link annotations applied to different records of the same dataset, or annotations present at different records of the dataset, nor to link back the rows of the reference to those of publicly available references.
5. The efficiency of the process has to be comparable to (no more than one order of magnitude in excess of) the clear-text operations.

Several applications have attempted to perform an encryption that covers the above-mentioned requirements. For example, searchable encryption disclosed in, e.g., D. Boneh, G. Di Crescenzo, R. Ostrovsky, and G. Persiano. Public key encryption with keyword search. In Proceedings of EUROCRYPT, volume 3027 of LNCS, pages 506-522. Springer, 2004*,* is a method which enables searching within a list of encrypted keywords by providing the server with a trapdoor to obtain the match with the exact keyword, avoiding further leakage; it can be applied in its public variant - Public Key Encryption with Keyword Search (PEKS) as disclosed by Joonsang Baek, Reihaneh Saavi-Naini, and Willy Susilo. Public key encryption with keyword search revisited. Online, Jun 2005. https://eprint.iacr.org/2005/191*,* or a symmetric variant disclosed in Reza Curtmola, Juan Garay, Seny Kamara, and Rafail Ostrovsky. Searchable symmetric encryption: improved definitions and efficient constructions. Online, Jun 2006. https://eprint.iacr.org/2006/210*,* in which case the server is not allowed to encrypt new data. This approach has several limitations that are addressed by the present invention: firstly, with searchable encryption the server learns the trapdoor for the corresponding keyword, so it can reuse it on any other file encrypted under the same key. In the outsourced annotation and reannotation scenario, both the input data and the reference have to be protected from the server (the annotation database can be private to the institution outsourcing the process); therefore, searchable encryption is not suitable anymore, due to two reasons: a) several files will be annotated with the same reference file; hence, in order to avoid to reencrypt the reference per each query, the trapdoors for each of the keywords of the reference would be eventually revealed after a number of queried annotations, rendering the searchable encryption additional features with respect to a deterministic encryption useless, while the computational complexity of the searchable encryption primitives is much higher; b) using a keyword dictionary would mean that the server is able to identify those locations where the same keyword is present after its corresponding trapdoor is revealed; while this might not be a problem for a spam checker, a virus analyzer or a mail filter, it becomes a serious problem in scenarios dealing with personal identifiable information, where identifying where some given tokens occur means being able to re-identify the individual with a high probability of success. Therefore, searchable encryption is not appropriate for this process.

Other approaches for obtaining an encrypted match employ Private Information Retrieval (PIR) as disclosed by C. Aguilar-Melchor, J. Barrier, L. Fousse, and Killijian M.O. XPIR: Private information retrieval for everyone. In Proceedings on Privacy Enhancing Technologies, volume 2, pages 155-174, Dec 2016*,* which allows to search for a token in a database known by the server without disclosing the retrieved record. While in this case both the token and the match are kept protected from the server (outsourced untrusted environment), the database must be known by this server to be able to do the match, which goes against the requirement of keeping both the database and the to-be-annotated data concealed from the untrusted environment.

Document "Blind seer: a scalable private DBMS", Pappas Vasilis et al. (Symposium on Security and Privacy, 2014 IEEE), discloses a search method including protection of the data from both server and client, and protection of the query.

Document "Automated context aggregation and file annotation for PAN-based computing", Alexandros Karypidis et al. (Personal and Ubiquitous Computing, Springer Verlag, London, October 2006), discloses a method for automatically annotating files created on portable devices with contextual metadata.

As a conclusion, none of the aforementioned currently available systems and solutions can simultaneously cope with the five requirements.

### BRIEF DESCRIPTION OF THE DRAWINGS

Disclosed embodiments are illustrated by way of example, and not by way of limitation, in the figures of the accompanying drawings.
Figure 1 shows an embodiment of a general structure of a secure outsourced annotation system.
Figure 2 shows an example of a method that may be implemented by a client protection module to accomplish a secure annotation protection subprocess.
Figure 3 shows an example of a method that may be implemented by a server annotation module to accomplish the secure annotation and reannotation subprocesses.
Figure 4 shows an example of a method that may be implemented by a client reconstruction module to accomplish a secure annotation reconstruction subprocess.
Figure 5A shows an example of encryption process for a dataset.
Figrue 5B shows an example of encryption process for a reference.
Figure 5C shows an example of an annotation process for the dataset of figure 5A by using the reference of figure 5B.
Figure 5D shows an example of a reconstruction of an annotated dataset.

### DETAILED DESCRIPTION

In essence, the present invention refers to a method for outsourced annotation on a sensitive dataset wherein the method comprises the steps of:
i) obtaining, by a first entity, a dataset from a user comprising several contents, being the contents organized in an input order;
ii) classifying the contents within the dataset into token fields and zero or more information fields associated to the token fields being the token fields;
iii) encrypting the dataset obtaining an encrypted dataset;
iv) permuting at least some of the fields of the encrypted data set thereby reorganizing the encrypted data set in an output order;
v) sending the encrypted data set to a second entity;
vi) searching, in the second entity, for matching token fields between the encrypted dataset and a reference dataset;
vii) defining for each information field associated to the token field with a matching token field of step vi) the information fields to be annotated;
viii) annotating the information fields for which an annotation was defined in step vii) thereby obtaining an encrypted annotated dataset; and
ix) sending the encrypted annotated data set to the first entity.
In an example, step vii) comprises searching for each record with a matching token field for a matching comparison field between a comparison field of the reference dataset and a comparison field within the information fields associated to the matching token field of the encrypted dataset.

In an example, step vii) comprises searching for each record with a matching token field for a match between a comparison field of the reference dataset and a comparison field within the information fields associated to the matching token field of the encrypted dataset.

In another example, step viii) comprises adding a value from the reference dataset to one of the information fields of the encrypted dataset. Furthermore, step viii) may comprise, for example, replacing the value of one of the information fields of the encrypted dataset with a new value from the reference dataset.

Preferably, the method further comprising adding a set of dummy fields on dataset prior to step iii). The dummy fields may be of a normalized value as to decrease the computational cost of the decryption.

In a preferred embodiment, step iv) comprises randomizing the order of the token fields as to enhance the unlinkability.

Furthermore, step iv) may comprise randomizing the order of the token fields and its associated information fields.

In an example, the token fields of the reference data are encrypted with the same algorithm as the token fields of the encrypted dataset. Also, said encryption may be a block cipher, a format preserving encryption and/or a probabilistic encryption.

Also, the present invention refers to a system for outsourced annotation wherein the system comprises:
- a client component comprising a memory wherein a dataset is stored for encryption, the client component further comprising: an encryption module for encrypting the dataset obtaining an encrypted dataset; and a communication module for communicating the dataset; and
- a server component with a communication module for receiving the encrypted dataset from the client component and further comprising an annotation module;
wherein the client component comprises a client processor to classify contents of the dataset into token fields and zero or more fields associated to the token fields and wherein encryption module is to reorganize the dataset and encrypt the dataset, the server component being to match the encrypted dataset token fields with token fields of a reference, to define for each information field associated to a matching token field if the fields associated to the token fields are to be annotated and annotating by the annotation module the corresponding associated fields.

Preferably, the dataset and the reference comprises comparison fields and the server is to define the associated fields to be annotated depending on a match between the comparison fields of the reference and the encrypted dataset with matching token fields.

More preferably, in the system may comprise a processor configured to act in the following manner:
- A match between token fields and comparison fields, an annotation is not triggered;
- A match between token fields and no comparison fields, triggers an annotation of the associated values.

More preferably, the annotation module is to modify the values of the encrypted dataset by adding new values or replacing values.

In a preferred embodiment, the dataset is a variant call format file and the reference is a variant call format file.

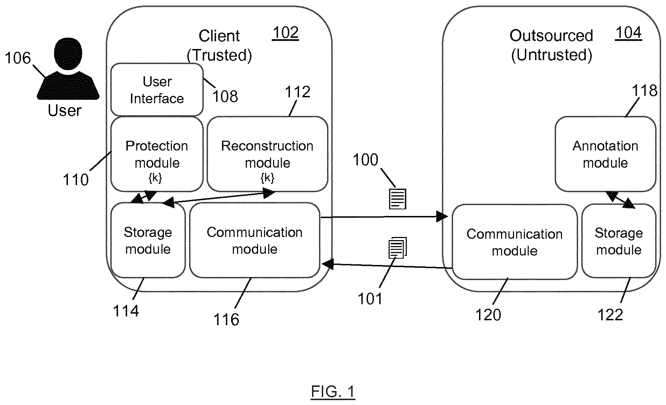

The system comprises a client component [102] and an outsourced component [104] that communicate with each other through their respective communication modules [116], [122]. In an example, a user owns a plurality of keys ({k}), and communicates with the client component [102] through a user interface [108]. Both of client component [102] and outsourced component [104] may contain their respective storage modules [114], [120] for storing data. The client storage module [114] may also store keys and dictionaries. In the example of figure 1, the client module is provided with a protection module [110], which takes clear-text datasets and/or references from the storage module and performs the secure annotation protection process by, first, using the plurality of keys {k}, thereby obtaining an encrypted data set [100] and sending the information to another device for its annotation, i.e., outsourcing the annotation. Furthermore, the client component [102] comprises a reconstruction module [112], which takes an encrypted annotated dataset [101] that may come from a device other than the client component [102] (such as, e.g., the outsourced component [104]) and performs the secure annotation reconstruction process to decrypt and obtain an annotated dataset.

On the other hand, the outsourced component [104] comprises an annotation module [118], which takes encrypted datasets received from the client component [102] and stored in the storage module [122] and performs outsourced secure annotation or reannotation processes on them resulting in an encrypted annotated dataset [126]. This annotation process is performed in conjunction with an encrypted reference which may also be received from the client component [102], from another device, or may be stored in the server storage module [122].

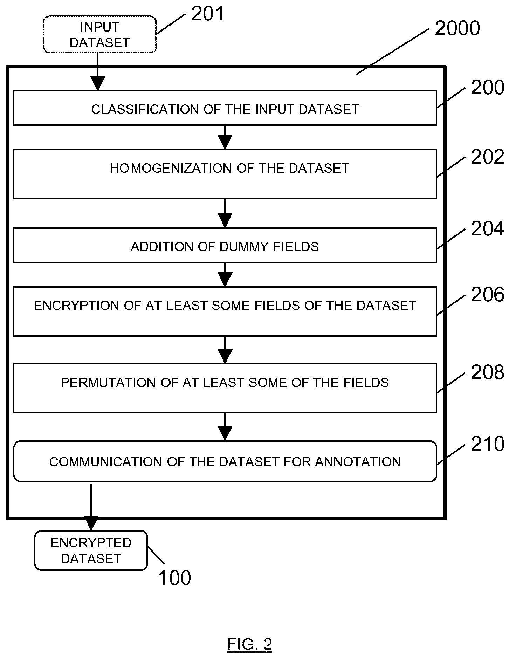

Figure 2 shows a method implemented by a client protection module, e.g., in a client processor [2000] of a client component [102], to accomplish a secure annotation protection (encryption) subprocess, which can be applied to both a dataset and/or a reference. The client module takes an input dataset [201] which can be, for example, a dataset or a reference and classifies the records [200] in, e.g., four categories: token fields, comparison fields, tags that may comprise values and unaffected fields. Then, it may perform a length homogenization process [202] on, at least, the sensitive fields and tags according to the category in which they have been classified in the previous step. For this step, it may use, for example, a configured plurality of thresholds (comprising but not limited to a minimum length and a maximum length), by expanding the underlength fields and/or compressing the overlength fields by using, e.g., a dictionary located at the storage module.

Further, the client module may, optionally, add dummy fields [204] according to configured parameters and distribution (which can be, among others, random, fixed, or comprise a plurality of thresholds) and may be subject the same length-homogenization used in the previous step.

The client module may also encrypt [206] some of all the fields within the dataset, including any possible dummy fields and tags that may be added in previous steps, using a set of configured plurality of keys and encryption mechanisms. Furthermore, hierarchy keys may be used on the dataset, e.g., applying a key for the tokens, a key for the tags and further keys on smaller subsets of information within the tags, the only restriction being that all tokens are encrypted with the same key.

In the preferred embodiment, the client module performs a permutation [208]. This permutation may be a random permutation of records (reorganizing the data set in a different order than initially obtained) and of tags (changing the order of the values within the tags). This permutation can be performed either in the encrypted dataset or in the dataset prior to its encryption. Also, this permutation may be performed depending on the class, and outputs an encrypted dataset [210].

In a further embodiment, the steps may be done in a different sequence obtaining the same result, e.g., the permutation [208] may be performed before the encryption [206] obtaining substantially the same result by using substantially the same means.

In an embodiment, the same encrypted procedure may be performed for a reference as a dataset. In such a case the output would be an encrypted reference. These encrypted datasets and/or references may be outsourced and sent to a server for annotation purposes.

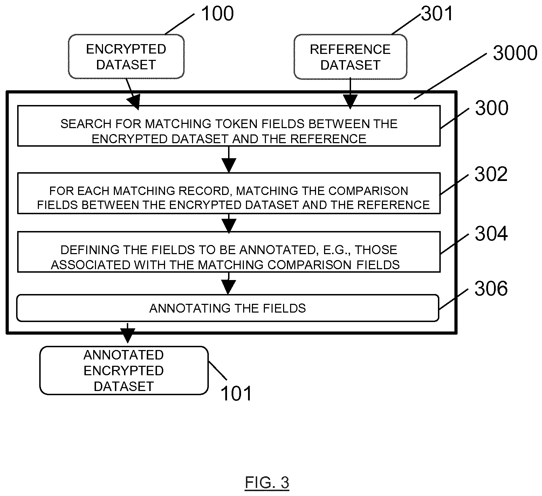

Figure 3 shows a method that may be implemented, e.g., by a processor [3000] in a server annotation module within an outsourced component [104] to accomplish the secure annotation subprocess. The secure annotation can be applied to an encrypted dataset, which has been previously processed at the client, for example, by the secure encryption process depicted in figure 2 by using an encrypted reference [301] stored on the server.

The server module receives the encrypted dataset [100] and has stored (or receives) an encrypted reference [301]. The server module searches for matching token fields [300] between the encrypted reference [301] and the encrypted dataset [100]. Then, for each record with a matching token field, if there is at least one comparison field in the dataset, the server checks all the encrypted comparison fields [302] corresponding to that token which are present in the encrypted reference to determine whether the record has to be annotated [304]. For example, the following rules may be used in an exemplary annotation process:
- If the encrypted dataset [100] has no comparison fields or has comparison fields matching the comparison fields of the reference for that particular token, the encrypted dataset is to be annotated in an annotation process.
Then, for each record with a matching token field that has to be annotated, the server checks all the encrypted information (for example the tags and the values that the tags may comprise) corresponding to that token present in the reference, and updates the encrypted dataset thereby annotating it [306], depending on the used configuration. For example, the fields can be updated by adding new information from the reference into the encrypted data field or replacing the information within the fields with new information.

Then, after all the matching encrypted records are processed, the server outputs the encrypted annotated dataset [306] and may notify a client depending on the server configuration.

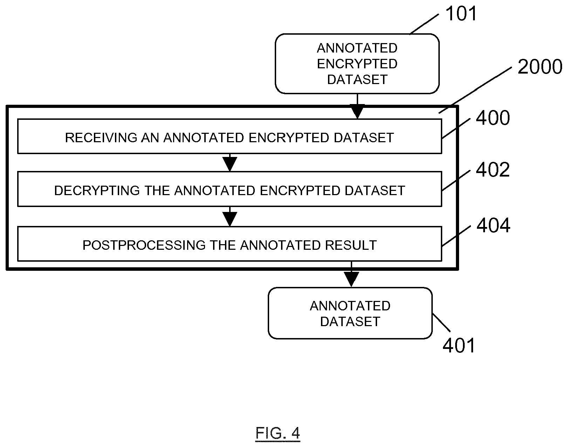

Figure 4 shows a method that may be implemented by a client in a reconstruction module [112] to accomplish a secure annotation reconstruction subprocess, which can be performed in a client processor [2000] and applied to an encrypted annotated dataset, which has been, e.g., previously processed at the server by the above-described outsourced secure annotation subprocess with reference to figure 3. In the embodiment of figure 4, the client obtains [400] an encrypted annotated dataset [101]. Then, the client decrypts all the fields and tags in the encrypted annotated dataset [402] by using the plurality of keys {k}. Then, the client postprocesses the decrypted annotated result [404], by identifying and removing the dummy fields and tags which may be known to the client and stored in a client storage module [114], or may be identified by, e.g., by their format or contents. Then, the client obtains the annotated result and converts it to the appropriate unencrypted dataset format [406].

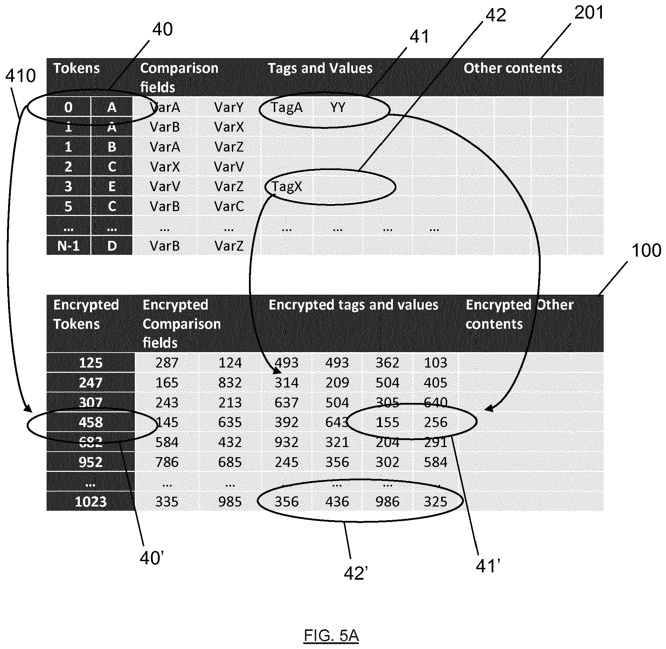

Figure 5A is an example of an encryption method according to the present invention which may be performed by a processor within a client infrastructure.

Figure 5A shows an input dataset [201] comprising token fields [40] with a tag [41] and an associated value, in the example, the tag TagA has YY as an associated value. The token encryption [410] encrypts the value of the token field [40], namely 0A into an encrypted token field [40'], namely 458. Further, the tag [41] has been encrypted. Into an encrypted tag [41']. In case of the tokens they have also been vertically reorganized, and the tags have been vertically and horizontally reorganized to enhance the unlinkability.

In other fields, for example on the tag [42], since there is no value, the encryption method may add dummy fields, so that encrypted dummies [42'] are also allocated on the encrypted dataset 100.

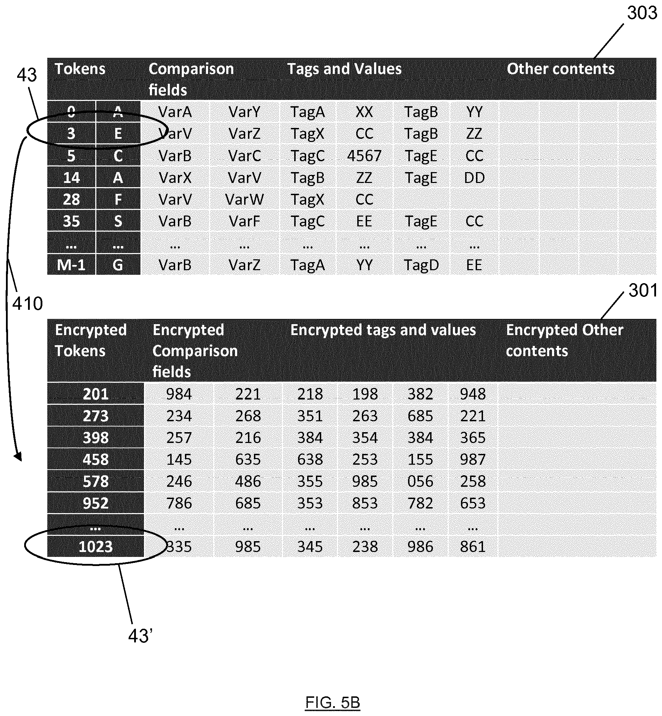

Figure 5B shows a protection method, in this case, to obtain a reference [301] that may be used in an outsourced annotation process. In the case of figure 5B, as input an unencrypted reference [303] is used comprising several fields, including a reference token field [43] that is encrypted by a token encryption [410] to obtain an encrypted reference token [43']. Also tag [44] and its corresponding values are encrypted and reorganized vertically and horizontally to encrypted tag [44'] thereby obtaining the reference [301].

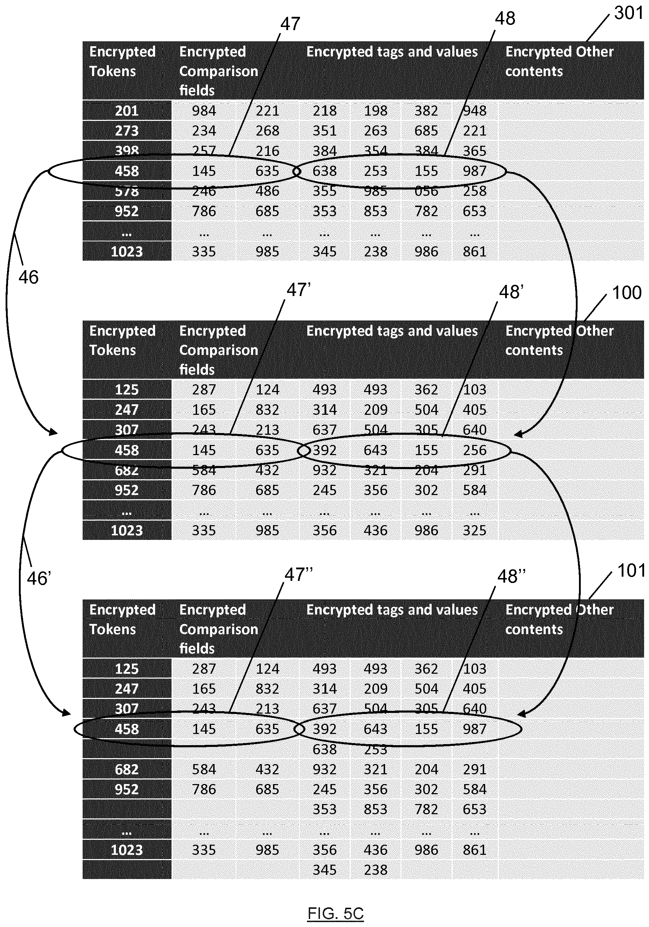

Figure 5C shows an encrypted outsourced annotation performed on an encrypted dataset [100] by using a reference [301]. In the example of figure 5C, the processor [3000] of the annotation server performs a matching [46] between token fields and comparison fields [47] of the reference [301] with the fields of the encrypted data set [100]. The processor establishes that there is match with a set of token and comparison fields [47'] of the encrypted dataset [100] and, therefore determines that, since there is a match between the token fields and the comparison fields, the fields associated to the token fields of the encrypted reference [100] is to be annotated.

Further, the processor [3000] proceeds with the annotation [46'] wherein the contents of at least some of the fields within the encrypted dataset [100] are to be modified, in particular, the encrypted fields [48'] corresponding to the tags and tag values. In the example of figure 5C, the annotation corresponds to the addition of reference fields [48] to the encrypted fields [48'] of the encrypted dataset thereby obtaining encrypted annotated fields [48"]. In other embodiments the modification of the encrypted dataset [100] can be, e.g., replacing the values of the encrypted dataset for those in the reference dataset, performing operations between the values or any other action involving both, the reference and the encrypted dataset.

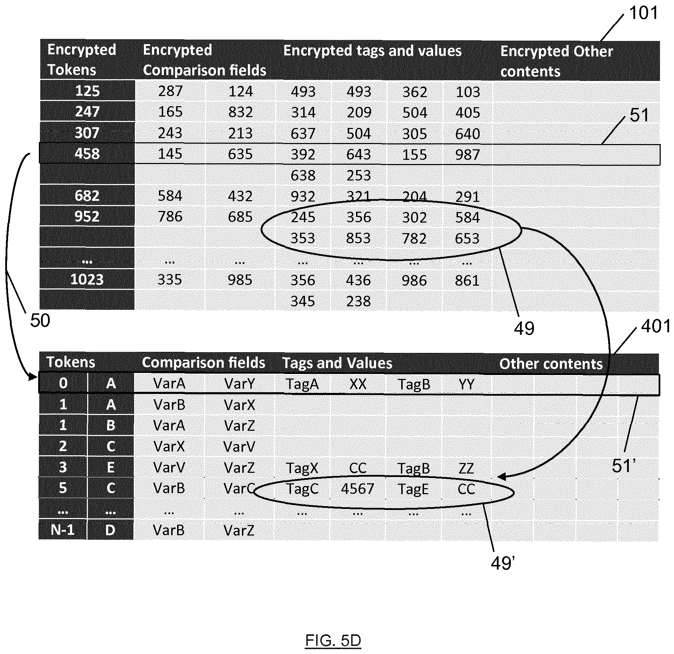

Figure 5D shows a reconstruction process to be performed in a client processor [2000] to obtain a decrypted annotated dataset [401]. In the decryption [50] all fields are decrypted using the keys owned by the user and the only step left is the removal of dummy fields [49] for obtaining the unencrypted annotated dataset [401]. In this case the encrypted annotated token fields with their associated contents [51] are decrypted into annotated token fields with associated contents [51'] and dummy fields [49] are eliminated in the annotated unencrypted dataset obtaining dummy-free tag values.

Disclosed embodiments include methods, apparatuses, and systems for a secure and outsourced annotation system in untrusted environments. The disclosure includes a system for secure annotation that comprises an encryption module, a dummy addition module, a dummy data expansion module, a random permutations module, a decryption module and encrypted annotation module in a storage system against annotation references in a possibly different storage system, e.g., an outsourced component [104] that may be located in a remote server. Such modules may be configured to directly work over encrypted data. The secure annotation system is an autonomous secure system that can be triggered by the client or programmed to run on updates of the encrypted references.

The system of the present invention enables a client to securely outsource the annotation tasks to an untrusted environment protecting the privacy of all the sensitive data outsourced by the client.

According to one embodiment, the secure annotation and reannotation system implements the advanced encryption standard in a block mode (e.g., CBC, CMC), enabling to operate with encrypted data. According to another embodiment, the encryption system is a format preserving encryption. According to another embodiment, the storage system can be a file system. According to another embodiment, the storage system can be a distributed file system or a cloud object storage. According to another embodiment, the storage system can be a relational or NoSQL database.

In order to fulfill the secure outsourced annotation and reannotation requirements, the present invention may use a symmetric deterministic encryption as in the encryption module, as it offers more security guarantees than order-preserving or order-revealing encryption, and due to the fact that no range searches are needed for annotating; furthermore, the present invention performs a clever choice of a plurality of keys and initialization vectors to meet the unlinkability requirement.

The present invention may also use of random permutations of the rows and columns inside the dataset, and a dummy addition strategy to achieve the unlinkability requirements. A preferred embodiment of the secure encryption, annotation and decryption process involves three sub-processes: secure annotation protection; outsourced secure annotation, and secure annotation reconstruction, which are described in more detail below.

An example of a method for protection of the datasets prior to outsourcing them comprises the following steps:
Classification step: The classification module divides the different fields present in each record of the dataset in two categories: token fields and contents wherein the contents may comprise serval values, such as, comparison values, tags, tag values, or information values and other contents not used or affected by the annotation.
   - Token fields: These fields are used to index the contents of the dataset, so they may be encrypted under the same key to be able to traverse the file and identify and match them with the reference contents; nevertheless, as they are unique, they are not repeated in the same dataset, therefore the server will not be able to link contents associated to different tokens. It must be noted that only their combination has to be unique, but single fields can be repeated. The client module collapses and packs all the token fields of the same record into one single encryption, and may use them to reorder the rows as will be described in more detail below, so that they cannot be identified with their position in the original dataset. Also this feature improves the annotation performance when no index is available and it is performed, .e.g., on a non-random access medium (e.g., a binary file read sequentially).
   - Comparison fields: These are part of the contents, these comparisson fields may be matched between dataset and reference to determine whether the contents associated to a token have to be annotated or not. Contents associated to different tokens may preferably be encrypted under different keys in order to avoid linkage, but the fields corresponding to the same token fields have to be encrypted under the same cryptographic key in both the dataset and the reference. Therefore, the client module applies a mask to the inputs determined by the token fields of that record, which randomizes the encryption across contents associated to different tokens but results in a deterministic encryption for contents associated to matching tokens. Additionally, the comparison fields at each record may be reordered, e.g., according to a random permutation given by their encrypted order.
   - Tags comprising zero or more values: These are the annotations which may be added or updated for matching fields from the reference to the dataset. Hence, the server must be able to recognize which tags are already present on the file (so that their values are updated) and which ones have to be added as new tags. Therefore, all the tags associated to the same token may be encrypted under the same cryptographic key, based on a mask determined by their corresponding token field (analogously as for the comparison fields); for the tags with at least a value, the values may be encrypted under a key dependent both on the token field and the tag to which they are associated, so that only the values of the matching tags can be compared.
   - Other contents unaffected by the annotation: These are contents which should be preserved in the dataset after the annotation process, but which are not used or affected by the annotation. Hence, they can be encrypted under any key and with any encryption mechanism, as no operation is performed on them; in order to avoid linking between different rows, the present invention uses, in an example, probabilistic encryption (if the expansion is acceptable) or deterministic symmetric encryption with a different key or mask per record, so that the server cannot match the contents of different unaffected fields.
Length homogenization: The present invention may comprise a homogenization step that may extend the length of all the fields within the dataset, e.g., to a predefined minimum message size, in order to avoid re-identification of the fields or tags by their size. In order to achieve a tradeoff between efficiency and protection, it is possible to adjust this minimum size to any value in between the cipher block size and the size of the longest admissible input field, so that only the largest fields can be identified. This step can also be configured to admit several thresholds, to which the input fields and tags can be mapped depending on their sensitivity and their original size, therefore producing several different sets (one per threshold) of indistinguishable encrypted fields and tags. Additionally, this step can also be optionally configured with a maximum size, in which case the client module employs a dictionary in which the overlength fields and tags are compressed and mapped to univocally defined maximum-length sequences.
Dummy addition: In order to further conceal the contents of the file and avoid the identification of a row by the number of tags or comparison fields, in an embodiment, a dummy fields addition step may be included for the comparison fields and/or the annotation fields. These dummies may contain, e.g., illegal sequences which can be parsed and removed after decryption, but they are indistinguishable from real values under encryption. Analogously to the message size, it is also possible to adjust the number of dummies to make it random between the smallest and the largest number of tags or comparison fields associated to a token, to have different thresholds, or to keep all (or a minimum predefined number of) the field categories associated to a token with the same number of fields and/or tags. The added dummies keep the same length homogenization from the previous step.
Encryption of the dataset: The encryption may be performed for all the different contents classified in the first step and, if added, the dummy contents. The encryption mechanism used in this step can be, e.g., a block cipher, including but not limited to: AES (Advanced Encryption Standard) in CBC (Cipher-Block-Chaining) mode, which results in an efficient implementation, AES in CMC (CBC-masks-CBC) mode, when prefix linkage has to be avoided at the cost of slightly increased encryption/decryption time, a Format Preserving Encryption (like the Flexible Naor and Reingold - FNR - cipher), to reduce even more the cipher expansion and produce encrypted outputs that cannot be distinguished from well-formed clear-text inputs. The client may use a plurality of keys to perform this encryption, employing a unique key for the token fields, and a key derived from the unique key and the corresponding token for the record's comparison fields, tags and unaffected fields, and a key derived from the unique key, and the corresponding token and tag for their respective values.
Randomization: In order to avoid mapping the inputs to the encrypted outputs, the final step applies one extra level of randomization: the encrypted fields may be shuffled so that their order does not match the initial ordering of the inputs. Even though the reorganization does not need to be a random reorganization, adding this extra component enhances the unlinkability.

The previously described process may be applied by the client to an input dataset and/or a reference before they are sent to the outsourced server. The outsourced secure annotation is run by the server, which can start an annotation subprocess of any protected outsourced dataset and protected reference, either triggered by a client request or by a programmed reannotation due to the outsourcing of an updated reference. Each annotation process in the server involves one protected dataset and one protected reference, and comprises the following steps:
- The server searches the matching encrypted token fields in the dataset and reference, which identify the matching records as all the fields associated to the matching token.
- If there is at least one comparison field in the dataset, for each matching record, the server compares the encrypted comparison fields from the dataset record and the reference record to determine if the record has to be annotated. If there are no comparison fields, all matching records have to be annotated.
- For each matching record which has to be annotated, the server adds or replaces the encrypted tags and their respective values present in the reference into the dataset record. The choice of addition or replacement can be configured in the server module.
- The server stores back the annotated dataset in the storage module.

Also, the same annotation method may be applied to an already encrypted annotated dataset, this process is known as reannotation process and it may be performed with either an updated reference or, in more general terms, to a different reference.

The secure annotation reconstruction may be performed by a client after a secure outsourced annotation or secure reannotation process has been performed. In an embodiment, it comprises the following steps:
a) The client decrypts the encrypted annotated dataset. For this process, the same set of keys and encryption formats are used.
b) The client post-processes the decrypted annotated dataset by identifying the added dummy fields and tags and removing them and, also, using the dictionary to detect the unique identifiers of the compressed univocally defined maximum-length sequences and substitute them with their corresponding clear-text values.
c) The client reconstructs the annotated dataset from the post-processed decrypted annotated dataset, and outputs it in the required format.

### Example applications

In one embodiment of the present invention, the client manages a plurality of genomic datasets in the form of variant call format (VCF) or binary variant call format (BCF) files, and wants to outsource the annotation of one or several of these files with a reference file taken from dbSNP, Clinvar or another private database. The client wants to have these files annotated at the moment of their upload to the server, but also run a reannotation every time the reference files are updated. The client then runs the secure annotation protection process on all the involved variant call files, including the references, with his/her/its secret key and derived keys, as contemplated in the process description. The client then uploads them to the server, which can run the secure outsourced annotation process between variant call files and references and notify the client when the process is finished. These annotated files can only be decrypted by the client using his/her/its secret key and derived keys, and the service provider does not have access to the input data in the clear, nor the annotation results. As an example, the client may be a research laboratory in a hospital or a pharmaceutical company, that wants to annotate the results of the sequencing and variant calling on its patients to determine the significance of the found variants. An annotation service provider may provide more computing power than the laboratory's on-premise infrastructure, and yield faster and more complete results, automating both the annotation and reannotation process every time the client uploads new updated references. The laboratory then outsources the annotation to the annotation service provider. Due to legal binding and privacy concerns regulated by data protection laws on personal and identifiable information, the laboratory does not want to grant access to the annotation service provider on any of the patient's data, so it encrypts them and all the subsequent processing is carried out on encrypted patient's data, thus blocking the annotation service provider from any misuses. Additionally, this procedure also precludes the use of deanonymization techniques by the service provider. The system can be configured by the client to obtain different trade-offs between privacy (linkability) and performance, by means of altering the dummy rate parameters, the size of the used dictionary and the length thresholds for the fields and tags' encryptions. Hence, we account for the different sensitivities of the involved variants in order to apply different approaches of protection, and consider also the background information coming from public databases (known variants and reference genomes, distributions and population-wide information) to determine the needed protection levels and the information leakage when not all the inputs are encrypted.

Patient's data may comprise, but are not limited to, variant calling outcomes from wide exome sequencing, wide genome sequencing, or specific panels run on the patient genomic sequence. In this embodiment, the CHROM (number of the chromosome), POS (position) and REF (reference allele) as token fields, and ALT (variant) descriptors can be considered either as the (possibly multiple) comparison fields or as part of the token fields; ID (variant identifier) and INFO (annotation) are considered as tag-value fields, and FORMAT and other sample-fields as classified as unaffected. The secure outsourced annotation system performs the annotation on the encrypted data of these variant call files and references by outputting the same results as a local unprotected annotation process as tools like SNPsift, but these tools do not allow for any kind of protection of the processed data, and are not suitable for outsourcing the annotation process to a service provider.

In summary, the fields CHROM, POS, REF, and/or ALT fields may be encrypted together and used as token field for indexing, ALT may also be used as comparison field, ID are tag fields, INFO are values of the tag fields and FORMAT and extra fields are considered unaffected by the annotation and encrypted under their corresponding set of keys.

In a second embodiment of the present invention, the client manages a plurality of data for the purposes of deploying anti-virus, anti-malware and/or spam-checking mechanisms, and wants to outsource the annotation of these data with a reference from other associated services, a public virus and malware database, or private databases holding virus and malware definitions. The client wants to have these data annotated at the moment of their upload to the server, but also run a reannotation every time the references are updated. The client then runs the secure annotation protection process on all the involved databases, including the references, with his/her/its secret key and derived keys, as contemplated in the process description. The client then uploads them to the server, which can run the secure outsourced annotation process between the client's databases and references and notify the client when the process is finished. These annotated files can only be decrypted by the client using his/her/its secret key and derived keys, and the service provider does not have access to the input data in the clear, nor the annotation results. As an example, the client may be the IT service of a company or public institution that wants to check whether found signatures in the files and messages interchanged through their infrastructure are infected by virus or malware. An annotation service provider may provide more computing power than the IT's on-premise infrastructure, and yield faster and more complete results, automating both the annotation and reannotation process every time the client uploads new updated references with up-to-date virus and malware definitions. The IT service then outsources the annotation to the annotation service provider. Due to legal binding, confidentiality constraints, and privacy concerns regulated by data protection laws, the IT service cannot grant access to the annotation service provider on any of the files and messages captured inside the on-premise infrastructure, so it encrypts them and all the subsequent processing is carried out on encrypted data, thus blocking the annotation service provider from any misuses. Additionally, this procedure also precludes the use of deanonymization techniques by the service provider. The system can be configured by the client to obtain different trade-offs between privacy and confidentiality (linkability) and performance, by means of altering the dummy rate parameters, the size of the used dictionary and the length thresholds for the fields and tags' encryptions.

The to-be-annotated data may comprise, but are not limited to, computer files, e-mails, attachments, web pages, log files or network traces. The token fields of these files are the signatures and features extracted by means of open-source or proprietary algorithms, which can be compared to virus and malware signatures. The secure outsourced annotation system performs the annotation on the encrypted data of these files and the virus, malware and/or spam references by outputting the same results as a local unprotected antivirus anti-malware or spam-checking tool, but these tools do not allow for any kind of protection of the processed data, and are not suitable for outsourcing the annotation process to a service provider.

In a third embodiment of the present invention, the client manages a database of personal information of wanted criminals or suspects, and wants to outsource the annotation of these data with a reference from other associated services, customs, airlines or other collaborating institutions. The client wants to have these data annotated at the moment of their upload to the server, but also run a reannotation every time the references are updated. The client then runs the secure annotation protection process on all the involved databases, including the references, with his/her/its secret key and derived keys, as contemplated in the process description. The client then uploads them to the server, which can run the secure outsourced annotation process between the client's databases and references and notify the client when the process is finished. These annotated files can only be decrypted by the client using his/her/its secret key and derived keys, and the service provider does not have access to the input data in the clear, nor the annotation results. As an example, the client may be a police service that wants to check whether some activity of suspects or criminals that they seek has been spotted in customs, transportation services, or payment providers, among others. Through the secure annotation service disclosed in this invention, both the annotation and reannotation process can be run every time the client uploads new updated references with up-to-date criminal or suspect descriptions. The police service then outsources the annotation to the annotation service provider. Due to legal binding, confidentiality constraints, and privacy concerns regulated by data protection laws, these databases and information cannot be shared without a warrant or express authorization from the individuals, so these databases cannot be automatically matched if no protection mechanism is applied. Through the disclosed system, the police service can encrypt all these databases and all the subsequent processing is carried out on encrypted data, thus blocking the annotation service provider from any misuses. Additionally, this procedure also precludes the use of deanonymization techniques by the service provider. The system can be configured by the client to obtain different trade-offs between privacy and confidentiality (linkability) and performance, by means of altering the dummy rate parameters, the size of the used dictionary and the length thresholds for the fields and tags' encryptions.

The to-be-annotated data may comprise, but are not limited to, personal identifiable information such as biometrics and demographic information, accounts and cards information, etc. The secure outsourced annotation system performs the annotation on the encrypted data of these databases and the references, enabling the outsourcing of the annotation process to a service provider thanks to the provided protection.

In a fourth embodiment of the present invention, the client manages a database of personal information of missing people, and wants to outsource the annotation of these data with a reference from other associated services, customs, airlines or other collaborating institutions. The client wants to have these data annotated at the moment of their upload to the server, but also run a reannotation every time the references are updated. The client then runs the secure annotation protection process on all the involved databases, including the references, with his/her/its secret key and derived keys, as contemplated in the process description. The client then uploads them to the server, which can run the secure outsourced annotation process between the client's databases and references and notify the client when the process is finished. These annotated files can only be decrypted by the client using his/her/its secret key and derived keys, and the service provider does not have access to the input data in the clear, nor the annotation results. As an example, the client may be a non-governmental organization or a police service that wants to check whether some reported missing people have been spotted in customs, transportation services, or payment providers, among others. Through the secure annotation service disclosed in this invention, both the annotation and reannotation process can be run every time the client uploads new updated references with up-to-date individual descriptions. The police service or non-governmental organization then outsources the annotation to the annotation service provider. Due to legal binding, confidentiality constraints, and privacy concerns regulated by data protection laws, these databases and information cannot be shared without a warrant or express authorization from the individuals, so these databases cannot be automatically matched if no protection mechanism is applied. Through the disclosed system, the police service or the non-governmental organization can encrypt all these databases and all the subsequent processing is carried out on encrypted data, thus blocking the annotation service provider from any misuses. Additionally, this procedure also precludes the use of deanonymization techniques by the service provider. The system can be configured by the client to obtain different trade-offs between privacy and confidentiality (linkability) and performance, by means of altering the dummy rate parameters, the size of the used dictionary and the length thresholds for the fields and tags' encryptions.

The to-be-annotated data may comprise, but are not limited to, personal identifiable information such as biometrics and demographic information, accounts and cards information, etc. The secure outsourced annotation system performs the annotation on the encrypted data of these databases and the references, enabling the outsourcing the annotation process to a service provider thanks to the provided protection.

Also, even thought for ease of explanation a tabular example was explained and the nomenclature refers to fields, a skilled person would understand that no tabular or similar configuration is required to carry out the invention. Other types of unstructured sets of data may also be annotated following the same method and/or using the systems claimed below.

## Claims

1. A method for outsourced annotation on a sensitive dataset wherein the method comprises the steps of:
i) obtaining, by a first entity (102), an input dataset (201) comprising several contents organized in an input order;
ii) classifying (200) the contents within the input dataset (201) into token fields and information fields associated to the token fields, wherein the token fields are unique identifiers;
iii) encrypting (206) token fields and information fields within the dataset using a plurality of keys ({k}) to obtain an encrypted dataset (100), wherein all the token fields are encrypted with a same key;
iv) sending (210) the encrypted dataset (100) to a second entity (104);
v) searching (300), in the second entity (104), for matching encrypted token fields (40'; 43') between the encrypted dataset (100) and an encrypted reference (301), wherein the information fields corresponding to the same token fields are encrypted under a same corresponding key in both the encrypted dataset (100) and the encrypted reference (301);
vi) defining (304), for the matching encrypted token fields, the encrypted information fields of the encrypted dataset (100) to be annotated;
vii) annotating (306) the defined encrypted information fields thereby obtaining an encrypted annotated dataset (101); and
viii) sending the encrypted annotated dataset (101) to the first entity (102).

2. Method according to claim 1, wherein the information fields associated to different token fields are encrypted under different keys.

3. Method according to claim 1, wherein the step of defining (304) the encrypted information fields to be annotated comprises searching (302), for each record with a matching encrypted token field, for a matching encrypted comparison field between a comparison field of the encrypted reference (301) and a comparison field within the information fields associated to the matching encrypted token field of the encrypted dataset (100).

4. Method according to claim 1, wherein the step of annotating (306) the encrypted information fields comprises adding a value from the encrypted reference (301) to one of the information fields of the encrypted dataset.

5. Method, according to claim 1, wherein the step of annotating (306) the encrypted information fields comprises replacing the value of one of the information fields of the encrypted dataset (100) with a new value from the encrypted reference (301).

6. Method according to claim 1, wherein the input dataset (201) is a variant call format file and the reference is a variant call format file.

7. Method according to claim 1, further comprising adding (204) a set of dummy fields on the input dataset (201) prior to the encryption.

8. Method according to claim 1, further comprising permuting (208) at least some of the information fields in the encrypted dataset (100) or in the input dataset (201) before the encryption (206).

9. Method according to claim 8, wherein the step of permuting (208) the information fields comprises randomizing the order of the token fields.

10. Method according to claim 8, wherein the step of permuting (208) the information fields comprises randomizing the order of the token fields and its associated information fields.

11. System for outsourced annotation on a sensitive dataset, wherein the system comprises:
• a client component (102) comprising a memory (114), an encryption module (110), a client processor (2000), and a communication module (116); wherein the client processor (2000) is configured to:
obtain an input dataset (201) stored in the memory (114), wherein the input database (201) comprises several contents organized in an input order;
classify (200) the contents within the input dataset (201) into token fields and information fields associated to the token fields, wherein the token fields are unique identifiers;
encrypt (206), using the encryption module (110), token fields and information fields within the dataset using a plurality of keys ({k}) to obtain an encrypted dataset (100), wherein all the token fields are encrypted with a same key;
send (210), using the communication module (116), the encrypted dataset (100) to a server component (104); and
• a server component (104) comprising a communication module (120) configured to receive the encrypted dataset (100) from the client component (102), and an annotation module (118) comprising a processor (3000) configured to:
search (300) for matching encrypted token fields (40'; 43') between the encrypted dataset (100) and an encrypted reference (301), wherein the information fields corresponding to the same token fields are encrypted under a same corresponding key in both the encrypted dataset (100) and the encrypted reference (301);
define (304), for the matching encrypted token fields, the encrypted information fields of the encrypted dataset (100) to be annotated;
annotate (306) the defined encrypted information fields thereby obtaining an encrypted annotated dataset (101); and
send the encrypted annotated dataset (101) to the client component (102).

12. System according to claim 11, wherein the input dataset (201) and the reference comprises comparison fields and the server component (104) is configured to define the associated fields to be annotated depending on a match between the comparison fields and the token fields.

13. System according to claim 12, wherein:
• A match between token fields and comparison fields triggers an annotation of the associated values;
• A match between token fields and the absence of comparison fields in the encrypted dataset (100) triggers an annotation of the associated values.

14. System according to claim 11, wherein the annotation module (118) is configured to modify the values of the encrypted dataset (100) by adding new values or replacing values.

15. System according to claim 11, wherein the input dataset (201) is a variant call format file and the reference is a variant call format file.

## Patentansprüche

1. Verfahren für ausgelagerte Annotation auf einem sensiblen Datensatz, wobei das Verfahren die folgenden Schritte umfasst:
i) Beziehen eines Eingangsdatensatzes (201) mit mehreren, in der Eingangsreihenfolge organisierten Inhalten durch eine erste Einheit (102);
ii) Klassifizieren (200) der Inhalte innerhalb des Eingangsdatensatzes (201) in Token-Felder und den Token-Feldern zugehörige Informationsfelder, wobei die Token-Felder eindeutige Identifikatoren sind;
iii) Verschlüsseln (206) der Token-Felder und Informationsfelder innerhalb des Datensatzes unter Verwendung einer Vielzahl von Schlüsseln ({k}) zum Erhalten eines verschlüsselten Datensatzes (100), wobei alle Token-Felder mit dem gleichen Schlüssel verschlüsselt sind;
iv) Übermitteln (210) des verschlüsselten Datensatzes (100) an eine zweite Einheit (104);
v) Suchen (300) nach übereinstimmenden verschlüsselten Token-Feldern (40'; 43') zwischen dem verschlüsselten Datensatz (100) und einer verschlüsselten Referenzangabe (301) in der zweiten Einheit (104), wobei die den jeweiligen Token-Feldern entsprechenden Informationsfelder sowohl in dem verschlüsselten Datensatz (100) als auch in der verschlüsselten Referenzangabe (301) mit dem gleichen entsprechenden Schlüssel verschlüsselt sind;
vi) Bestimmen (304) der zu annotierenden verschlüsselten Informationsfelder des verschlüsselten Datensatzes (100) für die jeweils zugehörigen verschlüsselten Token-Felder;
vii) Annotieren (306) der bestimmten verschlüsselten Informationsfelder, wodurch sich ein verschlüsselter annotierter Datensatz (101) ergibt; und
viii) Übermitteln des verschlüsselten, annotierten Datensatzes (101) an die erste Einheit (102).

2. Verfahren nach Anspruch 1, wobei die den verschiedenen Token-Feldern zugehörigen Informationsfelder mit unterschiedlichen Schlüsseln verschlüsselt sind.

3. Verfahren nach Anspruch 1, wobei der Schritt des Bestimmens (304) der zu annotierenden verschlüsselten Informationsfelder für jeden Eintrag mit einem übereinstimmenden verschlüsselten Token-Feld das Suchen (302) nach einem übereinstimmenden verschlüsselten Vergleichsfeld zwischen einem Vergleichsfeld der verschlüsselten Referenzangabe (301) und einem Vergleichsfeld in den dem entsprechenden verschlüsselten Token-Feld des verschlüsselten Datensatzes (100) zugehörigen Informationsfeldern umfasst.

4. Verfahren nach Anspruch 1, wobei der Schritt des Annotierens (306) der verschlüsselten Informationsfelder umfasst, dass einem der Informationsfelder des verschlüsselten Datensatzes ein Wert aus der verschlüsselten Referenzangabe (301) hinzugefügt wird.

5. Verfahren nach Anspruch 1, wobei der Schritt des Annotierens (306) der verschlüsselten Informationsfelder umfasst, dass der Wert eines der Informationsfelder des verschlüsselten Datensatzes (100) durch einen neuen Wert aus der verschlüsselten Referenzangabe (301) ersetzt wird.

6. Verfahren nach Anspruch 1, wobei der Eingangsdatensatz (201) eine Datei im Variant-Call-Format ist und die Referenzangabe eine Datei im Variant-Call-Format ist.

7. Verfahren nach Anspruch 1, das weiterhin das Einfügen (204) eines Satzes von Dummy-Feldern in den Eingangsdatensatz (201) vor der Verschlüsselung umfasst.

8. Verfahren nach Anspruch 1, das weiterhin das Permutieren (208) mindestens einiger der Informationsfelder in dem verschlüsselten Datensatz (100) oder dem Eingangsdatensatz (201) vor der Verschlüsselung (206) umfasst.

9. Verfahren nach Anspruch 8, wobei der Schritt des Permutierens (208) der Informationsfelder eine Randomisierung der Reihenfolge der Token-Felder umfasst.

10. Verfahren nach Anspruch 8, wobei der Schritt des Permutierens (208) der Informationsfelder eine Randomisierung der Reihenfolge der Token-Felder und der zugehörigen Informationsfelder umfasst.

11. System für ausgelagerte Annotation auf einem sensiblen Datensatz, wobei das System umfasst:
• eine Client-Komponente (102), die einen Speicher (114), ein Verschlüsselungsmodul (110), einen Client-Prozessor (2000) und ein Kommunikationsmodul (116) umfasst; wobei der Client-Prozessor (2000) ausgelegt ist, um:
einen im Speicher (114) gespeicherten Eingangsdatensatz (201) zu beziehen, wobei die Eingangsdatenbank (201) mehrere in der Eingangsreihenfolge organisierte Inhalte umfasst;
die Inhalte innerhalb des Eingangsdatensatzes (201) in Token-Felder und den Token-Feldern zugehörige Informationsfelder zu klassifizieren (200), wobei die Token-Felder eindeutige Identifikatoren sind;
unter Verwendung des Verschlüsselungsmoduls (110) die Token-Felder und Informationsfelder innerhalb des Datensatzes unter Verwendung einer Vielzahl von Schlüsseln ({k}) zu verschlüsseln (206), um einen verschlüsselten Datensatz (100) zu erhalten, wobei alle Token-Felder mit dem gleichen Schlüssel verschlüsselt sind;
den verschlüsselten Datensatz (100) unter Verwendung des Kommunikationsmoduls (116) an eine Server-Komponente (104) zu übermitteln (210); und
• eine Server-Komponente (104), umfassend ein Kommunikationsmodul (120), das zum Empfangen des verschlüsselten Datensatzes (100) von der Client-Komponente (102) ausgelegt ist, und ein Annotationsmodul (118), umfassend einen Prozessor (3000), der ausgelegt ist, um:
nach übereinstimmenden verschlüsselten Token-Feldern (40'; 43') zwischen dem verschlüsselten Datensatz (100) und einer verschlüsselten Referenzangabe (301) zu suchen (300), wobei die den jeweiligen Token-Feldern entsprechenden Informationsfelder sowohl in dem verschlüsselten Datensatz (100) als auch in der verschlüsselten Referenzangabe (301) mit dem gleichen entsprechenden Schlüssel verschlüsselt sind;
die zu annotierenden verschlüsselten Informationsfelder des verschlüsselten Datensatzes (100) für die jeweils zugehörigen verschlüsselten Token-Felder zu bestimmen (304);
die bestimmten verschlüsselten Informationsfelder zu annotieren (306), wodurch sich ein verschlüsselter annotierter Datensatz (101) ergibt; und
den verschlüsselten, annotierten Datensatz (101) an die Client-Komponente (102) zu übermitteln.

12. System nach Anspruch 11, wobei der Eingangsdatensatz (201) und die Referenzangabe Vergleichsfelder umfassen und die Server-Komponente (104) dazu ausgelegt ist, die zugeordneten, zu annotierenden Felder abhängig von der Übereinstimmung zwischen den Vergleichsfeldern und den Token-Feldern zu bestimmen.

13. System nach Anspruch 12, wobei:
• eine Übereinstimmung zwischen Token-Feldern und Vergleichsfeldern eine Annotation der zugehörigen Werte bewirkt;
• ein Vorhandensein von Token-Feldern und Fehlen von Vergleichsfeldern im verschlüsselten Datensatz (100) eine Annotation der zugehörigen Werte bewirkt.

14. System nach Anspruch 11, wobei das Annotationsmodul (118) dazu ausgelegt ist, die Werte des verschlüsselten Datensatzes (100) durch Hinzufügen neuer Werte oder Ersetzen von Werten zu verändern.

15. System nach Anspruch 11, wobei der Eingangsdatensatz (201) eine Datei im Variant-Call-Format ist und die Referenzangabe eine Datei im Variant-Call-Format ist.

## Revendications

1. Procédé pour l'annotation externalisée sur un ensemble de données sensible, dans lequel le procédé comprend les étapes consistant à :
i) obtenir, par une première entité (102), un ensemble de données d'entrée (201) comprenant plusieurs contenus organisés dans un ordre d'entrée ;
ii) classifier (200) les contenus dans l'ensemble de données d'entrée (201) en champs de jetons et en champs d'information associés aux champs de jetons, dans lequel les champs de jetons sont des identificateurs uniques ;
iii) chiffrer (206) les champs de jetons et les champs d'information dans l'ensemble de données en utilisant une pluralité de clés ({k}) pour obtenir un ensemble de données chiffré (100), dans lequel tous les champs de jetons sont chiffrés avec une même clé ;
iv) envoyer (210) l'ensemble de données chiffré (100) à une deuxième entité (104) ;
v) rechercher (300), dans la seconde entité (104), des champs de jetons chiffrés (40' ; 43') correspondants entre l'ensemble de données chiffré (100) et une référence chiffrée (301), dans lequel les champs d'information correspondant aux mêmes champs de jetons sont chiffrés sous une même clé correspondant aussi bien dans l'ensemble de données chiffré (100) que dans la référence chiffrée (301) ;
vi) définir (304), pour les champs de jetons chiffrés correspondants, les champs d'information chiffrés de l'ensemble de données chiffré (100) à annoter ;
vii) annoter (306) les champs d'information chiffrés définis, obtenant ainsi un ensemble de données annoté chiffré (101) ; et
viii) envoyer l'ensemble de données annoté chiffré (101) à la première entité (102).

2. Procédé selon la revendication 1, dans lequel les champs d'information associés à différents champs de jetons sont chiffrés sous différentes clés.

3. Procédé selon la revendication 1, dans lequel l'étape de définition (304) des champs d'information chiffrés à annoter comprend la recherche (302), pour chaque enregistrement avec un champ de jetons chiffré correspondant, d'un champ de comparaison chiffré correspondant entre un champ de comparaison de la référence chiffrée (301) et un champ de comparaison dans les champs d'information associés au champ de jetons chiffré correspondant de l'ensemble de données chiffré (100).

4. Procédé selon la revendication 1, dans lequel l'étape d'annotation (306) des champs d'information chiffrés comprend l'addition d'une valeur à partir de la référence chiffrée (301) à l'un des champs d'information de l'ensemble de données chiffré.

5. Procédé, selon la revendication 1, dans lequel l'étape d'annotation (306) des champs d'information chiffrés comprend le remplacement de la valeur d'un des champs d'information de l'ensemble de données chiffré (100) par une nouvelle valeur à partir de la référence chiffrée (301).

6. Procédé selon la revendication 1, dans lequel l'ensemble de données d'entrée (201) est un fichier de format d'appel variant et la référence est un fichier de format d'appel variant.

7. Procédé selon la revendication 1, comprenant en outre l'addition (204) d'un ensemble de champs fictifs sur l'ensemble de données d'entrée (201) avant le chiffrage.

8. Procédé selon la revendication 1, comprenant en outre la permutation (208) d'au moins certains des champs d'information dans l'ensemble de données chiffré (100) ou dans l'ensemble de données d'entrée (201) avant le chiffrage (206).

9. Procédé selon la revendication 8, dans lequel l'étape de permutation (208) des champs d'information comprend la randomisation de l'ordre des champs de jetons.

10. Procédé selon la revendication 8, dans lequel l'étape de permutation (208) des champs d'information comprend la randomisation de l'ordre des champs de jetons et de ses champs d'information associés.

11. Système pour l'annotation externalisée sur un ensemble de données sensible, dans lequel le système comprend :
• un composant client (102) comprenant une mémoire (114), un module de chiffrage (110), un processeur client (2000) et un module de communication (116) ; dans lequel le processeur client (2000) est configuré pour :
obtenir un ensemble de données d'entrée (201) stocké dans la mémoire (114), dans lequel la base de données d'entrée (201) comprend plusieurs contenus organisés dans un ordre d'entrée ;
classifier (200) le contenu dans l'ensemble de données d'entrée (201) en champs de jetons et en champs d'information associés aux champs de jetons, dans lequel les champs de jetons sont des identificateurs uniques ;
chiffrer (206), en utilisant le module de chiffrage (110), les champs de jetons et les champs d'information dans l'ensemble de données en utilisant une pluralité de clés ({k}) pour obtenir un ensemble de données chiffré (100), dans lequel tous les champs de jetons sont chiffrés avec une même clé ;
envoyer (210), en utilisant le module de communication (116), l'ensemble de données chiffré (100) à un composant serveur (104) ; et
• un composant serveur (104) comprenant un module de communication (120) configuré pour recevoir l'ensemble de données chiffré (100) à partir du composant client (102), et un module d'annotation (118) comprenant un processeur (3000) configuré pour :
rechercher (300) des champs de jetons chiffrés (40' ; 43') correspondants entre l'ensemble de données chiffré (100) et une référence chiffrée (301), dans lequel les champs d'information correspondant aux mêmes champs de jetons sont chiffrés sous une même clé correspondante aussi bien dans l'ensemble de données chiffré (100) que dans la référence chiffrée (301) ;
définir (304), pour les champs de jetons chiffrés correspondants, les champs d'information chiffrés de l'ensemble de données chiffré (100) à annoter ;
annoter (306) les champs d'information chiffrés définis, obtenant ainsi un ensemble de données annoté chiffré (101) ; et
envoyer l'ensemble de données annoté chiffré (101) au composant client (102).

12. Système selon la revendication 11, dans lequel l'ensemble de données d'entrée (201) et la référence comprennent des champs de comparaison et le composant serveur (104) est configuré pour définir les champs associés à annoter en fonction d'une correspondance entre les champs de comparaison et les champs de jetons.

13. Système selon la revendication 12, dans lequel :
• une correspondance entre les champs de jetons et les champs de comparaison déclenche une annotation des valeurs associées ;
• une correspondance entre les champs de jetons et l'absence de champs de comparaison dans l'ensemble de données chiffré (100) déclenche une annotation des valeurs associées.

14. Système selon la revendication 11, dans lequel le module d'annotation (118) est configuré pour modifier les valeurs de l'ensemble de données chiffré (100) en ajoutant des nouvelles valeurs ou en remplaçant des valeurs.

15. Système selon la revendication 11, dans lequel l'ensemble de données d'entrée (201) est un fichier de format d'appel variant et la référence est un fichier de format d'appel variant.
